# EUROPÄISCHE PATENTSCHRIFT

(11) **EP 3 611 354 B1**
(45) Veröffentlichungstag und Bekanntmachung des Hinweises auf die Patenterteilung: **26.01.2022**
(21) Anmeldenummer: 19190234.5
(22) Anmeldetag: 06.08.2019
(51) Int. Cl.: F01N 3/20, F01N 3/28, B01F 5/00, B01F 3/04, B01F 5/02, B01F 5/06

(54) **MISCHER**
MIXER
MÉLANGEUR

(30) Priorität: 13.08.2018 DE 102018119578
(43) Veröffentlichungstag der Anmeldung: 19.02.2020
(73) Patentinhaber: Purem GmbH, 66539 Neunkirchen (DE)
(72) Erfinder: Kurpejovic, Enver, 73230 Kirchheim unter Teck (DE); Vempati, Krishna Kumar, 73730 Esslingen (DE); Yenugula, Krishna Siva Prasad Reddy, 73734 Esslingen (DE); Hass, Ruben, 70599 Stuttgart (DE)
(74) Vertreter: Ruttensperger Lachnit Trossin Gomoll

(56) Entgegenhaltungen:
- EP-A1- 3 216 992
- WO-A1-2012/089290
- GB-A- 2 512 934
- US-A1- 2011 094 206
- US-A1- 2016 319 723

## Beschreibung

Die vorliegende Erfindung betrifft einen Mischer, der in einer Abgasanlage einer Brennkraftmaschine dazu eingesetzt werden kann, eine verbesserte Durchmischung von in den Abgasstrom eingespritztem Reaktionsmittel herbeizuführen.

Ein derartiger aus der deutschen Patentanmeldung 10 2016 104 361 oder aus der EP3216992A1 bekannter Mischer weist eine im Wesentlichen scheibenartige Gestalt auf und ist aus zwei mit näherungsweise kreisrunder Umfangskontur aufgebauten Scheibenteilen zusammengesetzt. Die Scheibenteile sind so geformt, dass sie einen Kanal zur Aufnahme von Reaktionsmittel bereitstellen. In diesen Kanal kann den Mischer umströmendes Abgas eintreten und sich somit mit dem eingespritzten Reaktionsmittel, beispielsweise einer Harnstoff/Wasser-Lösung, vermischen. Von diesem Kanal zweigen zwischen den beiden Scheibenteilen gebildete Abgabekanäle ab, über welche das Gemisch aus Reaktionsmittel und Abgas in den stromabwärts folgenden Teil einer Abgasanlage strömen kann.

Es ist die Aufgabe der vorliegenden Erfindung, einen Mischer für eine Abgasanlage zur Durchmischung von in einen Abgasstrom eingespritztem Reaktionsmittel mit Abgas vorzusehen, welcher bei baulich einfacher Ausgestaltung eine effiziente Durchmischung bewirken kann.

Erfindungsgemäß wird diese Aufgabe gelöst durch einen Mischer für eine Abgasanlage zur Durchmischung von in einen Abgasstrom eingespritztem Reaktionsmittel mit Abgas gemäß Anspruch 1. Dieser Mischer umfasst einen Mischerkörper mit einem Reaktionsmitteldurchtrittskörperbereich mit einer Reaktionsmitteldurchtrittsöffnung, einem in einer Mischerlängsrichtung an einer Seite an den Reaktionsmitteldurchtrittskörperbereich angrenzenden Mischerplattenkörperbereich und einem in der Mischerlängsrichtung an einer der einen Seite entgegengesetzten anderen Seite an den Reaktionsmitteldurchtrittskörperbereich angrenzenden Mischerhauptkörperbereich.

Aufgrund der baulich einfachen Ausgestaltung ist der Mischerkörper einstückig ausgebildet und aus einem Blechteil aufgebaut.

Für die Integration eines erfindungsgemäß aufgebauten Mischers in ein Abgasrohr ist der Mischerplattenkörperbereich bezüglich des Reaktionsmitteldurchtrittskörperbereichs in einem ersten Anwinkelungsbereich in einer ersten Anwinkelungsrichtung angewinkelt, und der Mischerhauptkörperbereich ist in einem zweiten Anwinkelungsbereich bezüglich des Reaktionsmitteldurchtrittskörperbereichs in einer zweiten Anwinkelungsrichtung angewinkelt ist, wobei die erste Anwinkelungsrichtung der zweiten Anwinkelungsrichtung entgegengesetzt ist.

Um das in Richtung auf den Mischerhauptkörperbereich zu strömende Reaktionsmittel effizient mit dem den Mischer umströmenden Abgas zu durchmischen, weist der Mischerkörper im Mischerhauptkörperbereich einen der Reaktionsmitteldurchtrittsöffnung zugewandt liegenden Ablenkrückenbereich und quer zur Mischerlängsrichtung beidseits des Ablenkrückenbereichs jeweils einen ausgehend vom Ablenkrückenbereich in Richtung von der Reaktionsmitteldurchtrittsöffnung weg sich erstreckenden Mischflächenbereich auf.

Mit diesem Aufbau eines Mischers wird es möglich, diesen als ein Materialstück bereitzustellen und durch entsprechende Formgebung die verschiedenen Funktionsbereiche daran bereitzustellen.

Beispielsweise kann der Aufbau derart sein, dass der Mischerkörper im Reaktionsmitteldurchtrittskörperbereich oder/und im Mischerplattenkörperbereich im Wesentlichen ungekrümmt ist.

Im zweiten Anwinkelungsbereich kann eine Mehrzahl von Durchtrittsöffnungen vorgesehen sein.

Um für eine definierte Durchmischung von Reaktionsmittel und Abgas eine entsprechende Ausrichtung des Mischerhauptkörperbereichs bezüglich des Reaktionsmitteldurchtrittskörperbereichs erreichen zu können, wird vorgeschlagen, dass im zweiten Anwinkelungsbereich der Mischerhauptkörperbereich bezüglich des Reaktionsmitteldurchtrittskörperbereichs stärker angewinkelt ist als der Mischerplattenkörperbereich im ersten Anwinkelungsbereich bezüglich des Reaktionsmitteldurchtrittskörperbereichs angewinkelt ist.

Für eine ausreichende Umströmung des Mischers mit Abgas kann der Mischerkörper im Reaktionsmitteldurchtrittskörperbereich quer zur Mischerlängsrichtung breiter sein als im Mischerplattenkörperbereich oder/und kann die im Reaktionsmitteldurchtrittskörperbereich vorgesehene Reaktionsmitteldurchtrittsöffnung quer zur Mischerlängsrichtung breiter sein als der Mischerplattenkörperbereich.

Die Durchmischung von Abgas und Reaktionsmittel kann dadurch unterstützt werden, dass im Mischerplattenkörperbereich eine Mehrzahl von Durchtrittsöffnungen vorgesehen ist.

Um dabei eine hohe Wirksamkeit der Mischflächenbereiche zu erreichen, kann vorgesehen sein, dass die beiden Mischflächenbereiche ausgehend vom Ablenkrückenbereich quer zur Mischerlängsrichtung auseinanderlaufen, oder/und dass in den Mischflächenbereichen eine Mehrzahl von Durchtrittsöffnungen vorgesehen ist.

Für eine baulich einfach zu realisierende Ausgestaltung kann der Ablenkrückenbereich ausgehend vom zweiten Anwinkelungsbereich sich in Richtung vom Reaktionsmitteldurchtrittskörperbereich weg erstrecken. Alternativ oder zusätzlich kann vorgesehen sein, dass der Ablenkrückenbereich ausgehend vom zweiten Anwinkelungsbereich sich in einem ersten Längenbereich im Wesentlichen geradlinig erstreckt und in einem an den ersten Längenbereich anschließenden und bezüglich diesem angewinkelten zweiten Längenbereich sich im Wesentlichen geradlinig erstreckt.

Für eine verstärkte Durchmischung bei ausreichender Durchströmfläche wird vorgeschlagen, dass der Ablenkrückenbereich im zweiten Längenbereich eine Mehrzahl von Durchtrittsöffnungen aufweist, oder/und dass der Ablenkrückenbereich im ersten Längenbereich keine Durchtrittsöffnungen aufweist.

Eine die Durchmischung von Reaktionsmittel und Abgas herbeiführende Verwirbelung des Abgasstroms kann beispielsweise dadurch erzeugt werden, dass der Mischerhauptkörperbereich an jeden Mischflächenbereich anschließend einen bezüglich diesem angewinkelten Ablenkflächenbereich aufweist.

Dabei kann vorgesehen sein, dass die Ablenkflächenbereiche sich ausgehend vom Angrenzungsbereich des ersten Längenbereichs des Ablenkrückenbereichs an den zweiten Anwinkelungsbereich entlang der Mischflächenbereiche zu einem vom ersten Längenbereich entfernten Ende des zweiten Längenbereichs des Ablenkrückenbereichs erstrecken.

Um eine definierte Strömung in Richtung auf den Mischerhauptkörperbereich zu zu unterstützen, wird vorgeschlagen, dass am Reaktionsmitteldurchtrittskörperbereich die Reaktionsmitteldurchtrittsöffnung umgebend eine in Richtung auf den Mischerhauptkörperbereich zu sich erstreckende Strömungsführungselementenformation vorgesehen ist.

Die vorliegende Erfindung betrifft ferner eine Abgasanlage für eine Brennkraftmaschine, umfassend ein Abgasrohr, eine Reaktionsmittel in einer Reaktionsmittel-Hauptabgaberichtung in das Abgasrohr abgebende Reaktionsmittelabgabeanordnung und einen erfindungsgemäß aufgebauten Mischer.

Um eine effiziente Durchmischung des Reaktionsmittels mit dem Abgas herbeizuführen, wird vorgeschlagen, dass der Mischer derart im Abgasrohr angeordnet ist, dass die Reaktionsmittel-Hauptabgaberichtung durch die Reaktionsmitteldurchtrittsöffnung hindurch auf den Mischerhauptkörperbereich zu gerichtet ist.

Der Mischerplattenkörperbereich kann in einer Abgas-Hauptströmungsrichtung im Abgasrohr stromaufwärts bezüglich des Reaktionsmitteldurchtrittskörperbereichs angeordnet sein. Ferner kann der Mischerhauptkörperbereich im Wesentlichen orthogonal zur Abgas-Hauptströmungsrichtung im Abgasrohr angeordnet sein.

Die vorliegende Erfindung wird nachfolgend mit Bezug auf die beiliegenden Figuren detailliert beschrieben. Es zeigt:
- Fig. 1: eine Längsschnittansicht einer Abgasanlage mit einer Reaktionsmittelabgabeanordnung und einem Mischer;
- Fig. 2: eine perspektivische Ansicht des Mischers der Abgasanlage der Fig. 1;
- Fig. 3: eine Ansicht des Mischers der Fig. 2 in Blickrichtung III in Fig. 1;
- Fig. 4: eine Ansicht des Mischers der Fig. 2 in Blickrichtung IV in Fig. 1;
- Fig. 5: eine Ansicht des Mischers der Fig. 2 in Blickrichtung V in Fig. 1;
- Fig. 6: eine Ansicht des Mischers der Fig. 2 in Blickrichtung VI in Fig. 1;
- Fig. 7: eine der Fig. 3 entsprechende Ansicht einer alternativen Ausgestaltungsart des Mischers;
- Fig. 8: eine weitere der Fig. 3 entsprechende Ansicht einer alternativen Ausgestaltungsart des Mischers.

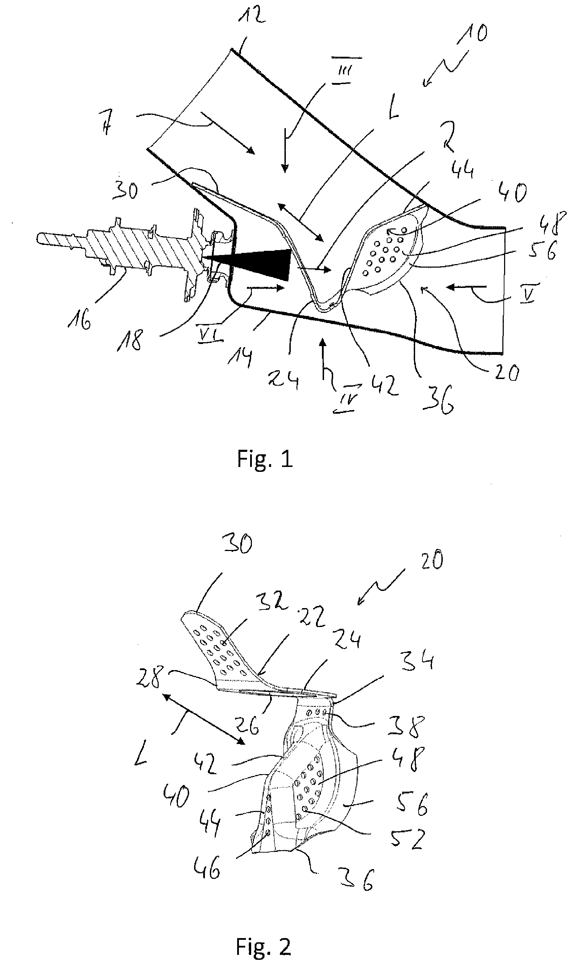

Die Fig. 1 zeigt in Längsschnittansicht einen Abschnitt einer allgemein mit 10 bezeichneten Abgasanlage für eine Brennkraftmaschine eines Fahrzeugs. Diese Abgasanlage 10 umfasst ein Abgasrohr 12, in welchen das von einer Brennkraftmaschine ausgestoßene Abgas in einer Abgas-Hauptströmungsrichtung A strömt. In einem seitlichen Ausbauchungsbereich 14 ist am Abgasrohr 12 eine allgemein auch als Injektor bezeichnete Reaktionsmittelabgabeanordnung 16 derart vorgesehen, dass diese das in das Abgas einzuspritzende Abgas in Form eines Sprühkegels 18 in einer Reaktionsmittel-Hauptabgaberichtung R in den Abgasstrom einspritzt. Aufgrund des Umstandes, dass die Reaktionsmittelabgabeanordnung 16 im seitlichen Ausbauchungsbereich 14 an das Abgasrohr 12 angebunden ist, sind die Abgas-Hauptströmungsrichtung A und die Reaktionsmittel-Hauptabgaberichtung R nicht parallel zueinander, sondern schließen einen Winkel im Bereich von etwa 45° zueinander ein.

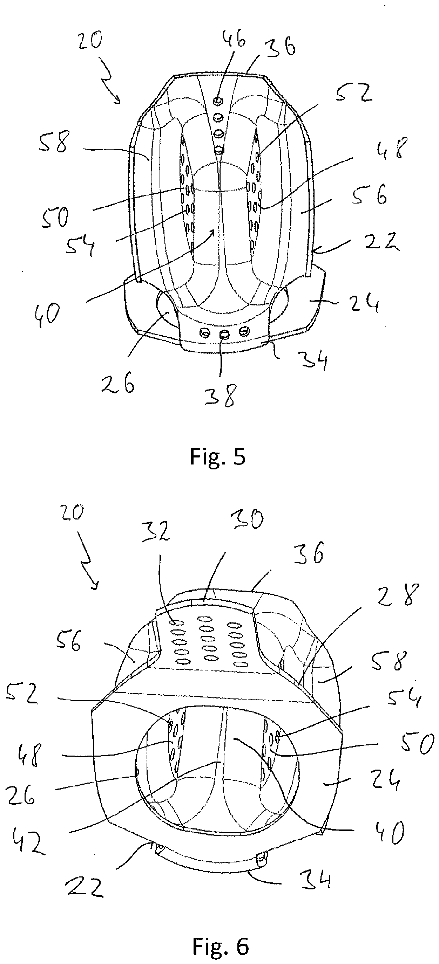

Im Abgasrohr 12 ist ferner ein allgemein mit 20 bezeichneter und nachfolgend auch mit Bezug auf die Fig. 2 bis 6 detailliert beschriebener Mischer vorgesehen. Der Mischer 20 dient dazu, eine verbesserte Durchmischung von im Abgasrohr 12 strömendem Abgas mit in den Abgasstrom eingespritztem Reaktionsmittel, also beispielsweise einer Harnstoff/Wasser-Lösung, zu erreichen, so dass in einer stromabwärts folgenden SCR-Katalysatoranordnung auch eine effiziente Abgasreinigung bewirkt werden kann.

Der Mischer 20 umfasst einen vorzugsweise aus einem einzigen Blechstück geformten Mischerkörper 22. Dazu kann aus einer Blechplatte in Rohling für den Mischerkörper 22 herausgetrennt, mit den verschiedenen nachfolgend noch erläuterten Öffnungen versehen und dann durch einen Umformungsprozess in die nachfolgend noch erläuterte Form gebracht werden.

Der Mischerkörper 22 umfasst als zentralen Bereich einen Reaktionsmitteldurchtrittskörperbereich 24. Dieser im Wesentlichen eben, also ungekrümmt ausgebildete Reaktionsmitteldurchtrittskörperbereich 24 stellt eine beispielsweise mit kreisrunder oder eckiger Kontur ausgebildete Reaktionsmitteldurchtrittsöffnung 26 bereit. An einer Seite des Reaktionsmitteldurchtrittskörperbereichs 24 in einer Mischerlängsrichtung L schließt in einem ersten Anwinkelungsbereich 28 ein beispielsweise ebenfalls im Wesentlichen eben, also ungekrümmt ausgebildeter Mischerplattenkörperbereich 30 an. Im Mischerplattenkörperbereich 30 sind mehrere Durchtrittsöffnungen 32, beispielsweise in drei Reihen angeordnet, vorgesehen. An der anderen Seite des Reaktionsmitteldurchtrittskörperbereichs 24 in der Mischerlängsrichtung L schließt in einem zweiten Anwinkelungsbereich 34 ein allgemein mit 36 bezeichneter Mischerhauptkörperbereich an. Die Fig. 1 und 2 zeigen deutlich, dass in den beiden Anwinkelungsbereichen 28, 34 der Mischerkörper 22 in entgegengesetzten Richtungen angewinkelt ist. Weiter ist deutlich erkennbar, dass im ersten Anwinkelungsbereich 28 der Mischerplattenkörperbereich 30 in geringerem Ausmaß bezüglich des Reaktionsmitteldurchtrittskörperbereichs 224 angewinkelt ist, als der Mischerhauptkörperbereich 36 im zweiten Anwinkelungsbereich 34 bezüglich des Reaktionsmitteldurchtrittskörperbereichs 24 angewinkelt ist. Während beispielsweise die Anwinkelung im ersten Anwinkelungsbereich 28 kleiner als 45° sein kann, ist die in entgegengesetzter Richtung vorgesehene Anwinkelung im zweiten Anwinkelungsbereich 34 im Bereich von 90° oder mehr.

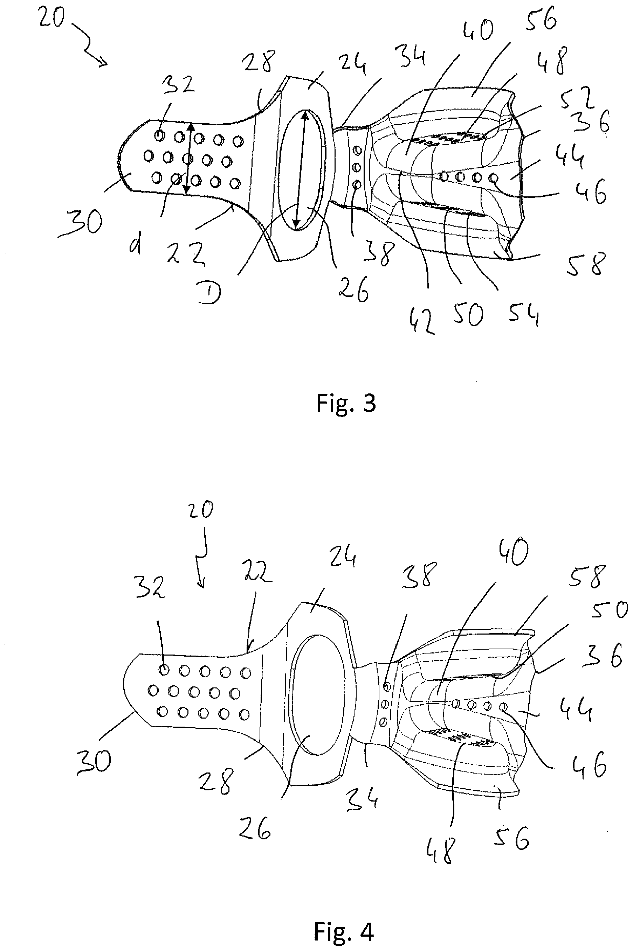

Die Fig. 3 und 4 zeigen deutlich, dass die Breite d des Mischerplattenkörperbereichs 30 quer zur Mischerlängsrichtung L kleiner ist, als die quer zur Mischerlängsrichtung L gemessene Breite D der Reaktionsmitteldurchtrittsöffnung 26. Auf diese Art und Weise überdeckt der Mischerplattenkörperbereich 30 bei der in Fig. 1 dargestellten Positionierung des Mischers 20 im Abgasrohr 12 die in Strömungsrichtung folgenden Bereiche nur teilweise bzw. schirmt dieser nur teilweise gegen die Anströmung mit Abgas ab.

Der Mischerhauptkörperbereich 36 ist derart geformt, dass er, ausgehend vom zweiten Anwinkelungsbereich 34, in welchem ebenfalls Durchtrittsöffnungen 38 vorgesehen sein können, einen in Richtung zur Reaktionsmitteldurchtrittsöffnung 26 bzw. zum Reaktionsmitteldurchtrittskörperbereich 24 orientierten Ablenkrückenbereich 40 aufweist. Der Ablenkrückenbereich 40 weist einen ausgehend vom zweiten Abwinkelungsbereich 32 sich im Wesentlichen geradlinig erstreckenden ersten Längenbereich 42 und anschließend an den ersten Längenbereich 42 einen sich im Wesentlichen geradlinig erstreckenden zweiten Längenbereich 44 auf. Während beispielsweise im ersten Längenbereich 42 des Ablenkrückenbereichs 40 keine Durchtrittsöffnungen vorgesehen sein können, sind im zweiten Längenbereich 44 mehrere Durchtrittsöffnungen 46 vorgesehen.

An den ersten Ablenkrückenbereich 42 schließen quer zur Mischerlängsrichtung L beidseits Mischflächenbereiche 48, 50 an. Diese erstrecken sich ausgehend vom Ablenkrückenbereich 40 in Richtung vom Reaktionsmitteldurchtrittskörperbereich 24 weg und quer zur Mischerlängsrichtung L voneinander weg, so dass der Mischerhauptkörperbereich 36 in der Mischerlängsrichtung L betrachtet in Strömungsrichtung eine zunehmende Breite aufweist. In jedem der Mischflächenbereiche 48, 50 sind wiederum mehrere Durchtrittsöffnungen 52, 54 vorgesehen.

Angrenzend an jeden Mischflächenbereich 48, 50 ist ein bezüglich des jeweils zugeordneten Mischflächenbereichs 48 bzw. 50 angewinkelter, also im Wesentlichen quer zur Mischerlängsrichtung L von diesem sich weg erstreckender Ablenkflächenbereich 56, 58 vorgesehen. Die Ablenkflächenbereiche 56, 58 erstrecken sich ausgehend von dem Bereich, in welchem der Ablenkrückenbereich 40 an den zweiten Anwinkelungsbereich 34 angrenzt, entlang der Mischflächenbereiche 48, 50 bis zu einem vom ersten Längenbereich 42 des Ablenkrückenbereichs 40 entfernten Ende des zweiten Längenbereichs 44 des Ablenkrückenbereichs 40. Damit weisen die Ablenkflächenbereiche 56, 58 eine an die Formgebung der Mischflächenbereichen 48, 50 angepasste gekrümmte Kontur auf.

Der Mischer 20 wird derart in das Abgasrohr 11 eingesetzt, dass der Mischerplattenkörperbereich 30 in seinem vom Reaktionsmitteldurchtrittskörperbereich 24 entfernten Ende an der Innenseite des Abgasrohrs 12 stromaufwärts der Ausbauchung 40 bzw. der Positionierung der Reaktionsmitteleingabeanordnung 16 anliegt und dort beispielsweise durch Verschweißung oder dergleichen festgelegt ist. Der Mischerhauptkörperbereich 36 liegt mit seinem vom zweiten Anwinkelungsbereich 34 entfernten Ende an einer gegenüberliegenden Seite des Abgasrohrs 12 an dessen Innenoberfläche an und ist dort beispielsweise ebenfalls durch Verschweißung festgelegt. Der Reaktionsmitteldurchtrittskörperbereich 24 ist mit seiner Reaktionsmitteldurchtrittsöffnung 26 so positioniert bzw. orientiert, dass er bereichsweise in die Ausbauchung 14 eingreifend einen Hindurchtritt des in Form des Sprühkegels 18 abgegebenen Reaktionsmittels in Richtung zum Ablenkrückenbereich 40 des Reaktionsmittelhauptkörperbereichs 36 zulässt. Quer zur Mischerlängsrichtung L ist der Reaktionsmitteldurchtrittskörperbereich 24 so dimensioniert, dass er beidseits der Reaktionsmitteldurchtrittsöffnung 26 mit seitlichen Randbereichen an der Innenoberfläche des Abgasrohrs 12 anliegt und dort beispielsweise durch Verschweißen am Abgasrohr 12 festgelegt ist.

Bereits im Bereich vor dem Hindurchtritt durch die Reaktionsmitteldurchtrittsöffnung 26 kann den Mischerplattenkörperbereich 30 im Bereich der Durchtrittsöffnungen 32 durchströmendes bzw. seitlich an diesem vorbeiströmendes Abgas in den Bereich des Sprühkegels 18 strömen und dort eine Durchmischung mit dem Reaktionsmittel herbeiführen. Der auf den Ablenkrückenbereich 40 auftreffende Reaktionsmittelstrom wird durch die in Richtung stromaufwärts konvex gewölbte Struktur des Reaktionsmittelhauptkörperbereichs 36 geteilt und entlang der beiden Mischflächenbereiche 48, 50 in Richtung auf die Ablenkflächenbereiche 56, 58 zu geleitet. Dabei wird eine Verwirbelung erzeugt, welche eine effiziente Durchmischung des Reaktionsmittels mit dem auch in der Abgas-Hauptströmungsrichtung A auf den Mischerhauptkörperbereich 36 zu strömenden Abgas bewirkt. Dabei kann bereits ein Teil des mit Reaktionsmittel durchmischten Abgases durch die Durchtrittsöffnungen 38, 52, 54 und 46 hindurchströmen. Ein weiterer Teil des Gemisches aus Abgas und Reaktionsmittel kann, nach seitlich außen abgelenkt durch die Ablenkflächenbereiche 56, 58 den Mischerhauptkörperbereich 36 umströmen und in den stromabwärts dann folgenden Bereich des Abgasrohrs 12 in Richtung auf eine SCR-Katalysatoranordnung zu strömen.

Die vorangehend beschriebene vergleichsweise schmale Ausgestaltung des Mischerplattenkörperbereichs 30 im Vergleich zum Reaktionsmitteldurchtrittskörperbereich 24 und die dadurch ermöglichte Anströmung des Reaktionsmitteldurchtrittskörperbereichs 24 mit Abgas an beiden Seiten desselben ermöglicht eine effiziente Erwärmung des gesamten Mischerkörpers 22, so dass auch eine verstärkte Abdampfung des auf dessen Oberfläche auftreffenden Reaktionsmittels bewirkt werden kann. Ein Teil des Abgasstroms kann dabei den Mischerkörper 22 im Bereich des zweiten Anwinkelungsbereichs 34 außen umströmen, also zwischen diesem und dem Abgasrohr 12 hindurchströmen, so dass ein nur mit einem geringen Anteil an Reaktionsmittel durchsetzter Abgasstrom auf die stromabwärtige Seite des Mischerhauptkörperbereichs 36 gelangen wird und dort aufgrund der vermittels der Ablenkflächenbereiche 56, 58 erzeugten Verwirbelung zu einer effizienten Durchmischung des aus dem Bereich des Mischerhauptkörperbereichs 36 heranströmenden mit Reaktionsmittel hoch konzentrierten Abgasstroms führen wird.

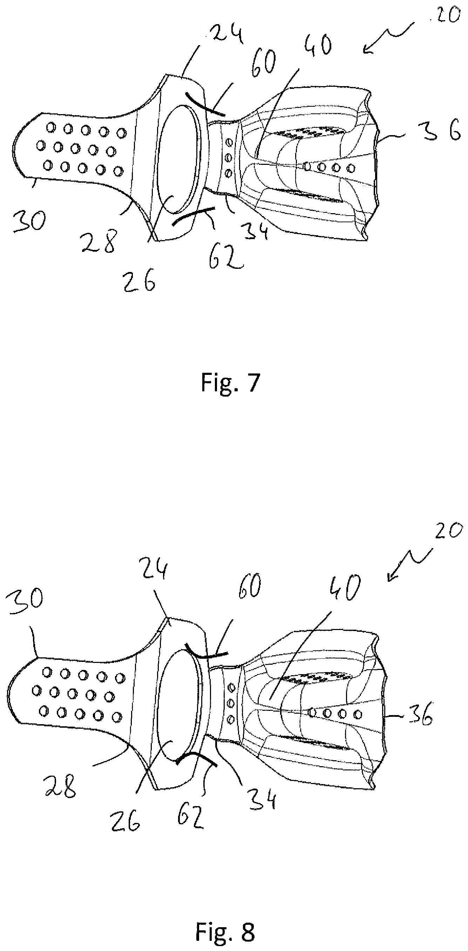

Die Fig. 7 und 8 zeigen abgewandelt Ausgestaltungen des Mischers 12. Man erkennt in Fig. 7, dass am Reaktionsmitteldurchtrittskörperbereich 24 beidseits der darin gebildeten Reaktionsmitteldurchtrittsöffnung 26 beispielsweise integral angeformte Ablenkelemente 60, 62 vorgesehen sind. Diese sind so geformt, dass sie in der Reaktionsmittel-Hauptabgaberichtung R aufeinander zu konvergieren und somit eine verstärkte Strömungsablenkung in Richtung auf den Ablenkrückenbereich 40 des Mischerhauptkörperbereichs 36 wirken können. Es ist selbstverständlich, dass hier mehr als zwei derartige Ablenkelemente aufeinander folgend vorgesehen sein können, die beispielsweise durch Umbiegen entsprechender am Innenumfang der Reaktionsmitteldurchtrittsöffnung 26 belassener Laschen bereitgestellt werden können.

Bei der in Fig. 8 dargestellten Ausgestaltung sind die Ablenkelemente 60, 62 derart geformt, dass sie zunächst aufeinander zu konvergierend den Durchströmquerschnitt einschnüren und dann durch divergierende Anordnung eine Aufweitung des Durchströmquerschnitts vorsehen. Aufgrund des so herbeigeführten Venturi-Effekts wird eine Beschleunigung des durch die Reaktionsmitteldurchtrittsöffnung 26 hindurchtretenden Stroms von Reaktionsmittel und auch Abgas erreicht.

Auch eine trichterartige Ablenkformation kann durch Ziehen des Mischerkörpers 22 im Reaktionsmitteldurchtrittskörperbereich 24 und dabei Anformen dieser Formation bereitgestellt werden.

## Patentansprüche

1. Mischer für eine Abgasanlage zur Durchmischung von in einen Abgasstrom eingespritztem Reaktionsmittel mit Abgas, umfassend einen einstückig aus einem Blechteil ausgebildeten Mischerkörper (22) mit einem Reaktionsmitteldurchtrittskörperbereich (24) mit einer Reaktionsmitteldurchtrittsöffnung (26), einem in einer Mischerlängsrichtung (L) an einer Seite an den Reaktionsmitteldurchtrittskörperbereich (24) angrenzenden Mischerplattenkörperbereich (30) und einem in der Mischerlängsrichtung (L) an einer der einen Seite entgegengesetzten anderen Seite an den Reaktionsmitteldurchtrittskörperbereich (24) angrenzenden Mischerhauptkörperbereich (36), wobei der Mischerplattenkörperbereich (30) bezüglich des Reaktionsmitteldurchtrittskörperbereichs (24) in einem ersten Anwinkelungsbereich (28) in einer ersten Anwinkelungsrichtung angewinkelt ist und der Mischerhauptkörperbereich (36) in einem zweiten Anwinkelungsbereich (34) bezüglich des Reaktionsmitteldurchtrittskörperbereichs (24) in einer der ersten Anwinkelungsrichtung entgegengesetzten zweiten Anwinkelungsrichtung angewinkelt ist, und wobei der Mischerkörper (22) im Mischerhauptkörperbereich (36) einen der Reaktionsmitteldurchtrittsöffnung (26) zugewandt liegenden Ablenkrückenbereich (40) und quer zur Mischerlängsrichtung (L) beidseits des Ablenkrückenbereichs (40) jeweils einen ausgehend vom Ablenkrückenbereich (40) in Richtung von der Reaktionsmitteldurchtrittsöffnung (26) weg sich erstreckenden Mischflächenbereich (48, 50) aufweist.

2. Mischer nach Anspruch 1, **dadurch gekennzeichnet, dass** der Mischerkörper (22) im Reaktionsmitteldurchtrittskörperbereich (24) oder/und im Mischerplattenkörperbereich (30) im Wesentlichen ungekrümmt ist.

3. Mischer nach Anspruch 1 oder 2, **dadurch gekennzeichnet,**
**dass** im zweiten Anwinkelungsbereich (34) eine Mehrzahl von Durchtrittsöffnungen (38) vorgesehen ist.

4. Mischer nach Anspruch 1, 2 oder 3, **dadurch gekennzeichnet, dass** im zweiten Anwinkelungsbereich (32) der Mischerhauptkörperbereich (36) bezüglich des Reaktionsmitteldurchtrittskörperbereichs (24) stärker angewinkelt ist als der Mischerplattenkörperbereich (30) im ersten Anwinkelungsbereich (28) bezüglich des Reaktionsmitteldurchtrittskörperbereichs (24) angewinkelt ist.

5. Mischer nach einem der vorangehenden Ansprüche, **dadurch gekennzeichnet, dass** der Mischerkörper (22) im Reaktionsmitteldurchtrittskörperbereich (24) quer zur Mischerlängsrichtung (L) breiter ist als im Mischerplattenkörperbereich (30), oder/und dass die im Reaktionsmitteldurchtrittskörperbereich (24) vorgesehene Reaktionsmitteldurchtrittsöffnung (26) quer zur Mischerlängsrichtung (L) breiter ist als der Mischerplattenkörperbereich (30).

6. Mischer nach einem der vorangehenden Ansprüche, **dadurch gekennzeichnet, dass** im Mischerplattenkörperbereich (30) eine Mehrzahl von Durchtrittsöffnungen (32) vorgesehen ist.

7. Mischer nach einem der vorangehenden Ansprüche, **dadurch gekennzeichnet, dass** die beiden Mischflächenbereiche (48, 50) ausgehend vom Ablenkrückenbereich (40) quer zur Mischerlängsrichtung (L) auseinanderlaufen, oder/und dass in den Mischflächenbereichen (48, 50) eine Mehrzahl von Durchtrittsöffnungen (52, 54) vorgesehen ist.

8. Mischer nach Anspruch 3 oder Anspruch 6 oder 7, sofern auf Anspruch 3 rückbezogen, **dadurch gekennzeichnet, dass** der Ablenkrückenbereich (40) ausgehend vom zweiten Anwinkelungsbereich (34) sich in Richtung vom Reaktionsmitteldurchtrittskörperbereich (24) weg erstreckt, oder/und dass der Ablenkrückenbereich (40) ausgehend vom zweiten Anwinkelungsbereich (34) sich in einem ersten Längenbereich (42) im Wesentlichen geradlinig erstreckt und in einem an den ersten Längenbereich (42) anschließenden und bezüglich diesem angewinkelten zweiten Längenbereich (44) sich im Wesentlichen geradlinig erstreckt.

9. Mischer nach Anspruch 8, **dadurch gekennzeichnet, dass** der Ablenkrückenbereich (40) im zweiten Längenbereich (44) eine Mehrzahl von Durchtrittsöffnungen (46) aufweist, oder/und dass der Ablenkrückenbereich (40) im ersten Längenbereich (42) keine Durchtrittsöffnungen aufweist.

10. Mischer nach einem der Ansprüche 6-9, **dadurch gekennzeichnet, dass** der Mischerhauptkörperbereich (36) an jeden Mischflächenbereich (48, 50) anschließend einen bezüglich diesem angewinkelten Ablenkflächenbereich (56, 58) aufweist.

11. Mischer nach Anspruch 8 und Anspruch 10, **dadurch gekennzeichnet, dass** die Ablenkflächenbereiche (56, 58) sich ausgehend vom Angrenzungsbereich des ersten Längenbereichs (42) des Ablenkrückenbereichs (40) an den zweiten Anwinkelungsbereich (34) entlang der Mischflächenbereiche (48, 50) zu einem vom ersten Längenbereich (42) entfernten Ende des zweiten Längenbereichs (44) des Ablenkrückenbereichs (40) erstrecken.

12. Mischer nach einem der vorangehenden Ansprüche, **dadurch gekennzeichnet, dass** am Reaktionsmitteldurchtrittskörperbereich (24) die Reaktionsmitteldurchtrittsöffnung (26) umgebend eine in Richtung auf den Mischerhauptkörperbereich (36) zu sich erstreckende Strömungsführungselementenformation (60, 62) vorgesehen ist.

13. Abgasanlage für eine Brennkraftmaschine, umfassend ein Abgasrohr (12), eine Reaktionsmittel in einer Reaktionsmittel-Hauptabgaberichtung (R) in das Abgasrohr (12) abgebende Reaktionsmittelabgabeanordnung (16) und einen Mischer (20) nach einem der vorangehenden Ansprüche.

14. Abgasanlage nach Anspruch 13, **dadurch gekennzeichnet, dass** der Mischer (20) derart im Abgasrohr (12) angeordnet ist, dass die Reaktionsmittel-Hauptabgaberichtung (R) durch die Reaktionsmitteldurchtrittsöffnung (26) hindurch auf den Mischerhauptkörperbereich (36) zu gerichtet ist.

15. Abgasanlage nach Anspruch 13 oder 14, **dadurch gekennzeichnet, dass** der Mischerplattenkörperbereich (30) in einer Abgas-Hauptströmungsrichtung (A) im Abgasrohr (12) stromaufwärts bezüglich des Reaktionsmitteldurchtrittskörperbereichs (24) angeordnet ist, oder/und dass der Mischerhauptkörperbereich (36) im Wesentlichen orthogonal zur Abgas-Hauptströmungsrichtung (A) im Abgasrohr (12) angeordnet ist.

## Claims

1. Mixer for an exhaust system for mixing reactant injected into an exhaust gas stream with exhaust gas, comprising a mixer body (22) with a one-piece configuration made of a sheet metal part with a reactant passage body area (24) with a reactant passage opening (26), with a mixer plate body area (30) adjoining the reactant passage body area (24) on one side in a mixer longitudinal direction (L), and with a mixer main body area (36) adjoining the reactant passage body area (24) on another side opposed to the one side in the mixer longitudinal direction (L), wherein the mixer plate body area (30) is bent in relation to the reactant passage body area (24) in a first bending area (28) in a first bending direction, and the mixer main body area (36) is bent in a second bending area (34) in relation to the reactant passage body area (24) in a second bending direction opposed to the first bending direction, and wherein the mixer body (22) has a deflecting rear area (40) located facing the reactant passage opening (26) in the mixer main body area (36) and a respective mixing surface area (48, 50) each extending in the direction away from the reactant passage opening (26) starting from the deflecting rear area (40) transverse to the mixer longitudinal direction (L) on both sides of the deflecting rear area (40).

2. Mixer in accordance with claim 1, **characterized in that** the mixer body (22) is essentially uncurved in the reactant passage body area (24) or/and in the mixer plate body area (30).

3. Mixer in accordance with claim 1 or 2, **characterized in that** a plurality of passage openings (38) are provided in the second bending area (34).

4. Mixer in accordance with claim 1, 2 or 3, **characterized in that** the mixer main body area (36) is bent more strongly in the second bending area (32) in relation to the reactant passage body area (24) than the mixer plate body area (30) is bent in the first bending area (28) in relation to the reactant passage body area (24).

5. Mixer in accordance with one of the preceding claims, **characterized in that** the mixer body (22) is broader in the reactant passage body area (24) transverse to the mixer longitudinal direction (L) than in the mixer plate body area (30), or/and that the reactant passage opening (26) provided in the reactant passage body area (24) is broader than the mixer plate body area (30) transverse to the mixer longitudinal direction (L).

6. Mixer in accordance with one of the preceding claims, **characterized in that** a plurality of passage openings (32) are provided in the mixer plate body area (30).

7. Mixer in accordance with one of the preceding claims, **characterized in that** the two mixing surface areas (48, 50) diverge at right angles to the mixer longitudinal direction (L) starting from the deflecting rear area (40), or/and that a plurality of passage openings (52, 54) are provided in the mixing surface areas (48, 50).

8. Mixer in accordance with claim 3 or claim 6 or 7, if referring back to claim 3, **characterized in that** the deflecting rear area (40) extends starting from the second bending area (34) in the direction away from the reactant passage area (24), or/and that the deflecting rear area (40) extends essentially straight starting from the second bending area (34) in a first length area (42) and extends essentially straight in a second length area (44), which adjoins the first length area (42) and is bent in relation to this length area.

9. Mixer in accordance with claim 8, **characterized in that** the deflecting rear area (40) has a plurality of passage openings (46) in the second length area (44), or/and that the deflecting rear area (40) has no passage openings in the first length area (42).

10. Mixer in accordance with one of the claims 6-9, **characterized in that** the mixer main body area (36) has, adjoining each mixing surface area (48, 50), a deflecting surface area (56, 58) bent in relation to the latter.

11. Mixer in accordance with claim 8 and claim 10, **characterized in that** the deflecting surface areas (56, 58) extend, starting from the area in which the first length area (42) of the deflecting rear area (40) adjoins the second bending area (34), along the mixing surface areas (48, 50) to an end of the second length area (44) of the deflecting rear area (40), which end is located at a distance from the first length area (42).

12. Mixer in accordance with one of the preceding claims, **characterized in that**, surrounding the reactant passage opening (26), a flow guide element formation (60, 62) extending in the direction of the mixer main body area (36) is provided at the reactant passage body area (24).

13. Exhaust system for an internal combustion engine, comprising an exhaust gas pipe (12), a reactant release device (16) releasing reactant in a main reactant release direction (R) into the exhaust gas pipe (12) and a mixer (20) in accordance with one of the preceding claims.

14. Exhaust system in accordance with claim 13, **characterized in that** the mixer (20) is arranged in the exhaust gas pipe (12) such that the main reactant release direction (R) is directed through the reactant passage opening (26) toward the mixer main body area (36).

15. Exhaust system in accordance with claim 13 or 14, **characterized in that** the mixer plate body area (30) is arranged in a main exhaust gas flow direction (A) in the exhaust gas pipe (12) upstream in relation to the reactant passage body area (24), or/and that the mixer main body area (36) is arranged essentially at right angles to the main exhaust gas flow direction (A) in the exhaust gas pipe (12).

## Revendications

1. Mélangeur pour un système d'échappement pour mélanger un réactif injecté dans un flux de gaz d'échappement avec des gaz d'échappement, comprenant un corps de mélangeur (22) avec une configuration en une pièce faite d'une pièce de tôle avec une zone de corps de passage de réactif (24) avec une ouverture de passage de réactif (26), avec une zone de corps de plaque de mélangeur (30) adjacente à la zone de corps de passage de réactif (24) sur un côté dans une direction longitudinale du mélangeur (L), et avec une zone de corps principal de mélangeur (36) adjacente à la zone de corps de passage de réactif (24) sur un autre côté opposé au premier côté dans la direction longitudinale du mélangeur (L), dans lequel la zone de corps de plaque de mélangeur (30) est pliée par rapport à la zone de corps de passage de réactif (24) dans une première zone de pliage (28) dans une première direction de pliage, et la zone de corps principal de mélangeur (36) est pliée dans une deuxième zone de pliage (34) par rapport à la zone de corps de passage de réactif (24) dans une deuxième direction de pliage opposée à la première direction de pliage, et dans lequel le corps de mélangeur (22) a une zone arrière de déviation (40) située en face de l'ouverture de passage de réactif (26) dans la zone de corps principal de mélangeur (36) et une zone de surface de mélange (48, 50) respective s'étendant chacune dans la direction opposée à l'ouverture de passage de réactif (26) en partant de la zone arrière de déviation (40) transversalement par rapport à la direction longitudinale du mélangeur (L) des deux côtés de la zone arrière de déviation (40).

2. Mélangeur selon la revendication 1, **caractérisé en ce que** le corps de mélangeur (22) est essentiellement non courbé dans la zone de corps de passage de réactif (24) ou/et dans la zone de corps de plaque de mélangeur (30).

3. Mélangeur selon la revendication 1 ou 2, **caractérisé en ce qu'**une pluralité d'ouvertures de passage (38) sont prévues dans la deuxième zone de flexion (34).

4. Mélangeur selon la revendication 1, 2 ou 3, **caractérisé en ce que** la zone de corps principal de mélangeur (36) est pliée plus fortement dans la deuxième zone de pliage (32) par rapport à la zone de corps de passage de réactif (24) que la zone de corps de plaque de mélangeur (30) n'est pliée dans la première zone de pliage (28) par rapport à la zone de corps de passage de réactif (24).

5. Mélangeur selon l'une des revendications précédentes, **caractérisé en ce que** le corps de mélangeur (22) est plus large dans la zone de corps de passage de réactif (24) transversalement à la direction longitudinale du mélangeur (L) que dans la zone de corps de plaque de mélangeur (30), ou/et que l'ouverture de passage de réactif (26) prévue dans la zone de corps de passage de réactif (24) est plus large que la zone de corps de plaque de mélangeur (30) transversalement à la direction longitudinale du mélangeur (L).

6. Mélangeur selon l'une des revendications précédentes, **caractérisé en ce qu'**une pluralité d'ouvertures de passage (32) sont prévues dans la zone de corps de plaque de mélangeur (30).

7. Mélangeur selon l'une des revendications précédentes, **caractérisé en ce que** les deux zones de surface de mélange (48, 50) divergent perpendiculairement à la direction longitudinale du mélangeur (L) à partir de la zone arrière de déviation (40), ou/et **en ce que** plusieurs ouvertures de passage (52, 54) sont prévues dans les zones de surface de mélange (48, 50).

8. Mélangeur selon la revendication 3 ou la revendication 6 ou 7, si l'on se réfère à la revendication 3, **caractérisé en ce que** la zone arrière de déviation (40) s'étend à partir de la deuxième zone de pliage (34) dans la direction opposée à la zone de corps de passage de réactif (24), ou/et **en ce que** la zone arrière de déviation (40) s'étend essentiellement en ligne droite à partir de la deuxième zone de pliage (34) dans une première zone longitudinale (42) et s'étend essentiellement en ligne droite dans une deuxième zone longitudinale (44), qui est adjacente à la première zone longitudinale (42) et est pliée par rapport à cette zone longitudinale.

9. Mélangeur selon la revendication 8, **caractérisé en ce que** la zone arrière de déviation (40) présente une pluralité d'ouvertures de passage (46) dans la deuxième zone de longueur (44), ou/et **en ce que** la zone arrière de déviation (40) ne présente pas d'ouvertures de passage dans la première zone de longueur (42).

10. Mélangeur selon l'une des revendications 6 à 9, **caractérisé en ce que** la zone de corps principal de mélangeur (36) présente, à la suite de chaque zone de surface de mélange (48, 50), une zone de surface de déviation (56, 58) pliée par rapport à cette dernière.

11. Mélangeur selon la revendication 8 et la revendication 10, **caractérisé en ce que** les zones de surface de déviation (56, 58) s'étendent, en partant de la zone dans laquelle la première zone longitudinale (42) de la zone arrière de déviation (40) se raccorde à la deuxième zone de flexion (34), le long des zones de surface de mélange (48, 50) jusqu'à une extrémité de la deuxième zone longitudinale (44) de la zone arrière de déviation (40), laquelle extrémité est située à distance de la première zone longitudinale (42).

12. Mélangeur selon l'une des revendications précédentes, **caractérisé en ce qu'**une formation d'éléments de guidage d'écoulement (60, 62) s'étendant en direction de la zone de corps principal de mélangeur (36) est prévue au niveau de la zone de corps de passage de réactif (24), entourant l'ouverture de passage de réactif (26).

13. Système d'échappement pour un moteur à combustion interne, comprenant un tuyau de gaz d'échappement (12), un dispositif de libération de réactif (16) libérant un réactif dans une direction principale de libération de réactif (R) dans le tuyau de gaz d'échappement (12) et un mélangeur (20) selon l'une des revendications précédentes.

14. Système d'échappement selon la revendication 13, **caractérisé en ce que** le mélangeur (20) est disposé dans le tuyau de gaz d'échappement (12) de telle sorte que la direction principale de libération du réactif (R) est dirigée à travers l'ouverture de passage de réactif (26) vers la zone de corps principal de mélangeur (36).

15. Système d'échappement selon la revendication 13 ou 14, **caractérisé en ce que** la zone de corps de plaque de mélangeur (30) est disposée dans une direction d'écoulement de gaz d'échappement principale (A) dans le tuyau de gaz d'échappement (12) en amont par rapport à la zone de corps de passage de réactif (24), ou/et **en ce que** la zone de corps principal de mélangeur (36) est disposée essentiellement orthogonalement par rapport à la direction d'écoulement de gaz d'échappement principale (A) dans le tuyau de gaz d'échappement (12).
